# EUROPÄISCHE PATENTANMELDUNG

(11) **EP 1 975 111 A1**
(43) Veröffentlichungstag der Anmeldung: **01.10.2008**
(21) Anmeldenummer: 07105131.2
(22) Anmeldetag: 28.03.2007
(51) Int. Cl.: B66B 7/06

(54) **Aufzugriemen, Herstellungsverfahren für einen solchen Aufzugriemen und Aufzuganlage mit einem solchen Riemen**

(71) Anmelder: INVENTIO AG, 6052 Hergiswil (CH)
(72) Erfinder: Ach, Ernst, 6030, Ebikon (CH)
(74) Vertreter: Gaussmann, Andreas

(57) **Zusammenfassung**

Ein erfindungsgemässer Aufzugriemen (12) umfasst einen Riemenkörper (13) aus einem ersten Material, eine Zugträgeranordnung mit wenigstens einem Zugträger (14), die in dem Riemenkörper angeordnet ist und eine Schlauchanordnung aus einem zweiten Material mit wenigstens einem Schlauch (15), wobei wenigstens ein Zugträger (14) der Zugträgeranordnung in einem Schlauch der Schlauchanordnung angeordnet ist.

## Beschreibung

Die vorliegende Erfindung betrifft einen Aufzugriemen, ein Herstellungsverfahren für einen solchen Aufzugriemen sowie eine Aufzuganlage mit einem solchen Aufzugriemen.

Eine Aufzugsanlage umfasst eine Aufzugskabine und in der Regel ein Ausgleichs- oder Gegengewicht, die in einem Aufzugsschacht oder entlang freistehender Führungseinrichtungen bewegbar sind. Aufzugkabine und Ausgleichs- bzw. Gegengewicht können über mindesten ein riemenartiges Tragmittel miteinander verbunden sein, um die Gewichtskraft der Aufzugkabine wenigstens teilweise zu kompensieren. Zum Erzeugen der Bewegung weist die Aufzugsanlage mindestens einen Antrieb mit mindestens je einem Treibrad auf, das über mindestens ein riemenartiges Antriebsmittel die erforderlichen Antriebskräfte auf die Aufzugkabine und gegebenenfalls auf das Ausgleichs- bzw. Gegengewicht überträgt.

Tragmittel und Antriebsmittel können, beispielsweise bei einem Trommelaufzug, durch separate Riemen gebildet werden, wobei die Tragmittel reine Umlenkelemente umschlingen und Aufzugkabine und Ausgleichsgewicht miteinander koppeln, während die Antriebsmittel auf das Treibrad aufgewickelt werden. Vorzugsweise werden die Funktionen des Tragmittels und des Antriebsmittels durch ein kombiniertes Trag- und Antriebsmittel erfüllt, was beispielsweise bei einem so genannten Treibscheibenaufzug der Fall ist. Dabei umschlingt mindestens ein riemenartiges Trag- und Antriebsmittel mindestens ein Treibrad, wobei das Gegengewicht die Gewichtskraft der Aufzugkabine wenigstens teilweise kompensiert und gleichzeitig die notwendige Treibfähigkeit zwischen dem Treibrad und dem Trag- und Antriebsmittel gewährleistet.

Ein Riemen nach der vorliegenden Erfindung kann für jede der oben beschriebenen Funktionen eingesetzt werden, also als Tragmittel, als Antriebsmittel, wie auch als kombiniertes Trag- und Antriebsmittel. Er wird daher im Folgenden einheitlich als Aufzugriemen bezeichnet.

Solche Aufzugriemen umfassen üblicherweise einen Riemenkörper aus einem Elastomer. Um die Zugkräfte zu übertragen, ist es, beispielsweise aus der EP 1 555 234 B1, bekannt, in dem Riemenkörper Zugträger in Form von Stahl- und/oder Kunststoff-Seilen einzubetten.
Zur Erhöhung des Anpressdruckes an das Treibrad und damit der Traktions- bzw. Treibfähigkeit bei gleicher Radialkraft und mithin gleicher Lagerbelastung und Riemenspannung ist es aus der EP 1 555 234 B1 weiterhin bekannt, die Kontaktfläche des Riemenkörpers, die mit einem Treibrad zusammenwirkt, mit Keilrippen auszubilden, die mit entsprechend geformten Rillen auf der Lauffläche des Treibrades in Eingriff kommen. Gleichzeitig gewährleisten die Keilrippen die Führung des Aufzugriemens auf dem Treibrad.

Die Verwendung von Zugträgern in Form von Seilen mit geringen Durchmessern ermöglicht es, Treibräder mit geringen Durchmessern einzusetzen. Es kann sogar die Abtriebswelle des Antriebs selbst als Treibrad ausgebildet sein. Im Folgenden wird daher einheitlich von Treibrädern gesprochen, was gleichermassen herkömmliche Treibscheiben mit grösseren Durchmessern, aber auch Treibräder mit kleineren Durchmessern und insbesondere auch die Abtriebswelle des Antriebs einer Aufzuganlage umfasst.

Treib- und Umlenkräder mit geringen Durchmessern haben jedoch den Nachteil, dass in den jeweils auf einem Treib- oder Umlenkrad aufliegenden Bereichen des Aufzugriemens die Zugträger eine hohe Flächenpressung auf den sie umgebenden Riemenkörper ausüben. Insbesondere wenn auch die Zugträger kleine Durchmesser aufweisen, kann sich dabei die genannte Flächenpressung so weit erhöhen, dass die Gefahr einer Schädigung des Riemenkörpers besteht. Ausserdem erfolgt bei einem Treibrad mit geringem Durchmesser die Übertragung der Traktionskraft vom Treibrad über den Riemenkörper auf die Zugträger entlang eines relativ kurzen Riemenabschnitts, was entsprechend hohe Schubspannungen zwischen dem Riemenkörper und den Zugträgern zur Folge hat.

Aufgrund der oben dargestellten Effekte kann es zu Schädigungen des Riemenkörpers kommen, beispielsweise in Form von (Mikro)Abrasion, von Zerrüttung des die Zugträger umgebenden Elastomers oder einem Einschneiden von Zugträgern in das Elastomer.

Eine Aufgabe der vorliegenden Erfindung ist es daher, eine Aufzuganlage zu schaffen, bei der das Risiko der Zerstörung des Aufzugriemens reduziert und dessen Lebensdauer erhöht ist.

Eine weitere Aufgabe der vorliegenden Erfindung ist es, einen Aufzugriemen für eine solche Aufzuganlage zur Verfügung zu stellen, der auch höhere Kräfte übertragen kann. Eine weitere Aufgabe der vorliegenden Erfindung ist es, ein Verfahren zur Herstellung eines solchen Aufzugriemens anzugeben.

Zur Lösung dieser Aufgaben sind ein Aufzugriemen nach dem Oberbegriff des Anspruchs 1, ein Herstellungsverfahren nach dem Oberbegriff des Anspruchs 14 bzw. eine Aufzuganlage nach dem Oberbegriff des Anspruchs 15 durch deren kennzeichnende Merkmale weitergebildet.

Ein Aufzugriemen für eine Aufzuganlage nach einer Ausführung der vorliegenden Erfindung umfasst einen Riemenkörper aus einem ersten Material, eine Zugträgeranordnung mit wenigstens einem Zugträger, die in dem Riemenkörper angeordnet ist, und eine Schlauchanordnung aus einem zweiten Material mit wenigstens einem Schlauch, wobei wenigstens ein Zugträger der Zugträgeranordnung in einem ihm zugeordneten eigenen Schlauch der Schlauchanordnung angeordnet ist. Bevorzugt sind mehrere, besonders bevorzugt alle Zugträger der Zugträgeranordnung in je einem eigenen Schlauch der Schlauchanordnung angeordnet.

Durch die Anordnung eines Zugträgers in einem Schlauch aus einem zweiten Material, welches bevorzugt fester, zäher, weniger elastisch, härter und/oder weniger kerbempfindlich als das erste Material ist, werden die auf den Zugträger wirkenden Zug-, Druck- und Schubkräfte zunächst auf den Schlauch übertragen und können von diesem homogener an den diesen Schlauch wenigstens teilweise umgebenden Riemenkörper übertragen werden, was einer Schädigung des Riemenkörpers durch punktuell hohe Kräfte entgegenwirkt. Der Schlauch kann die Kräfte zwischen Zugträger und Riemenkörper somit gleichmässiger verteilen.

Zugleich vergrössert sich vorteilhafterweise die Oberfläche, über die die Kräfte zwischen Zugträger und Riemenkörper übertragen werden, so dass die auftretenden Flächenlasten sich verringern bzw. höhere Kräfte übertragen werden können.

Die vergrösserte Oberfläche zwischen den Schläuchen der Schlauchanordnung und dem Riemenkörper kann die Verbindung zwischen diesen beiden Komponenten des Aufzugriemens verbessern. Auf der anderen Seite kann durch die Anordnung des bzw. der Zugträger in jeweils eigenen Schläuchen der Materialanteil der Schlauchanordnung am Gesamtvolumen des Aufzugriemens gering gehalten werden, so dass das erste Material des Riemenkörpers, welches bevorzugt gute Dämpfungs-, Reibungs- und/oder Schubverformungseigenschaften aufweist, einen hohen Materialanteil am Gesamtvolumen des Aufzugriemens bilden kann.

Bevorzugt besteht mindestens ein Zugträger der Zugträgeranordnung aus einem Drahtseil oder einem Kunstfaserseil, das aus ein- oder mehrfach verseilten Drähten oder Drahtlitzen bzw. aus ein- oder mehrfach verseilten Kunstfasergarnen oder Kunstfaserlitzen aufgebaut ist. Insbesondere bei mehrlagigen Zugträgern, bei denen Einzeldrähte bzw. Kunstfasergarne zu Litzen und diese wiederum zu dem Zugträger geschlagen sind, bewirkt der den Zugträger umgebenden Schlauch eine homogenere Verteilung der Kräfte, die von den Einzeldrähten oder Garnen bzw. von den einzelnen Litzen ausgeübt werden. Diese Kräfte werden zunächst von dem Schlauch aufgenommen, verteilen sich in diesem wenigstens teilweise und werden von dem Schlauch gleichmässiger auf den Riemenkörper übertragen.

Im Interesse einer Vereinfachung werden im Folgenden nur noch Zugträger in Form von Drahtseilen aus verseilten Drähten oder Drahtlitzen erwähnt.

Ein Schlauch oder mehrere Schläuche der Schlauchanordnung können jeweils einen Zugträger der Zugträgeranordnung mantelartig umhüllen, so dass das Innere der Zugträger frei von zweitem Material ist. Insbesondere können ein oder mehrere Zugträger mit dem zweiten Material ein- oder mehrlagig umflochten sein. Eine solche mantelartige Umhüllung kann vorteilhaft eine gewisse Mikrobewegung einzelner Drähte bzw. Litzen des Zugträgers relativ zueinander ermöglichen und so zu einem Spannungsausgleich, insbesondere bei der Umschlingung eines Treib- oder Umlenkrades führen.

Zusätzlich oder alternativ können ein oder mehrere Zugträger der Zugträgeranordnung jeweils in einem strangartigen Schlauch der Schlauchanordnung eingebettet sein, auf dessen Innenseite das den strangartigen Schlauch bildende zweite Material formschlüssig mit der Oberflächenstruktur des eingebetteten Zugträgers verbunden ist, wobei das zweite Material auch in vorhandene Zwischenräume des Zugträgers eindringen kann. Ein solcher strangartiger Schlauch kann die Kräfte besonders gut von den einzelnen Drähten oder Litzen des Zugträgers aufnehmen und zudem die Reibung der einzelnen Drähten oder Litzen des Zugträgers aneinander verringern.

Ein erfindungsgemässer Aufzugriemen kann mantel- und strangartige Schläuche umfassen. Gleichermassen können alle Schläuche der Schlauchanordnung auch einheitlich mantel- oder strangartig ausgebildet sein. Bevorzugt ist der mindestens eine Zugträger von einem konzentrischen Schlauch umgeben.

Es ist nicht notwendig, in jedem Schlauch der Schlauchanordnung einen Zugträger anzuordnen. Leere Schläuche können als Dummy-Schläuche vorgesehen sein, um Aufzugriemen mit strukturell gleichem Aufbau, aber unterschiedlichen Zugfestigkeiten und Gewichten herzustellen. Insbesondere können so einheitliche Riemenkörper verwendet werden, die eine einheitliche Anzahl von Schläuchen aufnehmen, wobei wahlweise leere Schläuche oder Schläuche mit einem Zugträger angeordnet werden.

Umgekehrt ist es nicht zwingend erforderlich, dass alle Zugträger in Schläuchen angeordnet sind. Neben in Schläuchen angeordneten Zugträgern können weitere Zugträger auch direkt in dem Riemenkörper angeordnet werden, die - beispielsweise aufgrund grösserer Durchmesser und damit grösserer Oberfläche und geringerer Kerbwirkung und/oder aufgrund geringerer Lasten - keiner Umhüllung durch einen Schlauch bedürfen.

Bevorzugt ist jedoch jeweils ein Zugträger einem Schlauch bzw. jeweils ein Schlauch einem Zugträger zugeordnet.

Zwei oder mehr Schläuche der Schlauchanordnung können miteinander über je einen Steg verbunden sein. Dies positioniert die Zugträger relativ zueinander, insbesondere bei der Einbettung in den Riemenkörper während der Herstellung. Die durch die Stege erzeugten grösseren Einheiten lassen sich ausserdem genauer lagerichtig in den Riemenkörper einbetten.

In einem Aufzugriemen nach einer Ausführung der vorliegenden Erfindung ist ein Steg im Wesentlichen zentrisch zu den durch ihn verbundenen Schläuchen und den darin angeordneten Zugträgern angeordnet. Solche Stege verleihen den Gebilden aus miteinander verbundenen Schläuchen und Zugträgern eine erhöhte Steifigkeit in Querrichtung, wodurch erreicht wird, dass sich der Aufzugriemen auch auf langen, ungeführten Riemenabschnitten perfekt geradlinig erstreckt und nicht zu Schwingungen neigt.
Durch solche Stege können sich ausserdem die durch ihn verbundenen Schläuche bzw. Zugträger besonders gut gegenseitig abstützen. Die Anordnung der Stege zentral zu den Schläuchen ist fertigungstechnisch besonders einfach.

Alternativ kann ein Steg im Wesentlichen tangential zu den durch ihn verbundenen Schläuchen angeordnet sein. Auch solcherart angeordnete Stege verleihen den Gebilden aus miteinander verbundenen Schläuchen und Zugträgern eine erhöhte Steifigkeit in Querrichtung, so dass der Aufzugriemen auch auf langen, ungeführten Riemenabschnitten sich perfekt geradlinig erstreckt und nicht zu Schwingungen neigt.

Im Wesentlichen tangential zu den durch sie verbundenen Schläuchen angeordnete Stege können vorteilhafterweise wenigstens teilweise eine Rückseite des Aufzugriemens bilden, die einer Kontaktfläche zum Zusammenwirken mit einem Treibrad der Aufzuganlage gegenüberliegt. Somit besteht die Rückseite des Aufzugriemens wenigstens teilweise aus dem zweiten Material. Dieses kann einen niedrigen Reibwert, bevorzugt einen Reibwert von µ ≤ 0,3, besonders bevorzugt von µ ≤ 0,25 und insbesondere von µ ≤ 0,2 aufweisen und so die Reibung bei einer Umlenkung um die Rückseite des Aufzugriemens reduzieren.

Insbesondere zu diesem Zweck kann es vorteilhaft sein, alle Schläuche der Schlauchanordnung durch einen Steg miteinander zu verbinden, der dann im Wesentlichen die Rückseite des Aufzugriemens bildet. Ist das zweite Material abriebfester als das erste Material, kann so der Abrieb, der bei einer Umlenkung um die Rückseite des Aufzugriemens auftritt, reduziert und so die Lebensdauer des Aufzugriemens verlängert werden.

Es sind auch Mischformen der beiden vorbeschriebenen Ausführungen möglich, bei denen ein Teil der Schläuche der Schlauchanordnung über zentrische, ein anderer Teil über tangentiale Stege miteinander verbunden ist, so dass die Vorteile beider Ausführungen verwirklicht werden können.

Mit besonderem Vorteil weist der Aufzugriemen eine Kontaktfläche zum Zusammenwirken mit einem Treibrad der Aufzuganlage auf, in der wenigstens eine, bevorzugt mehrere sich in Längsrichtung des Aufzugriemens erstreckende Keilrippen ausgebildet sind. Da bei solchen Keilrippenriemen der Abstand zwischen den Zugträgern und den Flanken der Keilrippen üblicherweise gering ist, andererseits jedoch möglichst gleichmässig sein soll, ist hier die durch die Schlauchanordnung bewirkte homogenere Verteilung der Kräfte und insbesondere die präzisere Positionierung der einzelnen Zugträger relativ zueinander und zum Riemenkörper besonders günstig.

Nach einer Ausführung der vorliegenden Erfindung weist mindestens eine Keilrippe einen im Wesentlichen trapezförmigen oder keilförmigen Querschnitt auf mit einem Flankenwinkel von 60° bis 120° zwischen ihren beiden Flanken. Gleichermassen sind auch andere Querschnittsformen, beispielsweise dreieckige oder kreissegmentförmige Querschnitte, möglich.

Das erste Material für den Riemenkörper umfasst bevorzugt ein Elastomer, insbesondere Polyurethan, Polychloropren oder Ethylen-Propylen-Dien-Kautschuk oder eine Mischung aus mindestens zwei Elastomeren. Ein derartiger elastomerer Riemenkörper ist ausreichend flexibel zur Umschlingung von Treib- oder Umlenkrädern. Gleichzeitig dämpft ein solches Material in bekannter Weise vorteilhaft Schwingungen und Stösse im Aufzugriemen. Zugleich erträgt es beim Zusammenwirken mit einer Lauffläche eines Treibrades die zur Übertragung der Zugkräfte in den Aufzugriemen erforderliche Schubverformung aufgrund seiner elastischen Eigenschaften.

Da die Kräfte über die Schlauchanordnung homogener in ihn eingeleitet werden, kann für den Riemenkörper ein relativ weiches zweites Material gewählt werden, dessen Härte bei Raumtemperatur vorteilhaft weniger als 90 Shore (A), bevorzugt weniger als 85 Shore (A) und besonders bevorzugt weniger als 80 Shore (A) beträgt.

Damit das zweite Material die relativ hohe lokale Flächenpressung ertragen kann, welche von den Zugträgern auf ihre Umhüllung ausgeübt wird, ist das zweite Material bevorzugt härter als das erste Material. In einer vorteilhaften Ausführung weist es bei Raumtemperatur eine Härte von wenigstens 85 Shore (A), bevorzugt von wenigstens 87,5 Shore (A) und besonders bevorzugt eine Härte von wenigstens 90 Shore (A) auf. In ein derart hartes Material schneiden die Zugträger auch unter hoher Belastung nicht oder nur wenig ein. Es erträgt auch auftretenden Druck- und/oder Schubspannungen, ohne eine erhöhte Abrasion oder Zerrüttung zu zeigen.

Das zweite Material kann einen thermoplastischen Kunststoff umfassen, insbesondere Polyamid (PA), Polyethylen (PE), Polyester, insbesondere Polyethylenterephthalat (PET) und/oder Polycarbonat (PC), Polypropylen (PP), Polybutylenterephthalat (PBT), Polyethersulfon (PES), Polyphenylensulfid (PPS), Polytetrafluorethylen (PTFE), Polyvinylchlorid (PVC) oder Polyblend und/oder ein Gewebe aus einem solchen thermoplastischem Kunststoff.

Ein Herstellungsverfahren für einen Aufzugriemen nach einer Ausführung der vorliegenden Erfindung umfasst die Schritte:
a) Herstellen der Schlauchanordnung aus dem zweiten Material.
b) Anordnen des bzw. der Zugträger der Zugträgeranordnung in dem bzw. den Schläuchen der Schlauchanordnung. Hierzu können insbesondere die einzelnen Zugträger mit dem zweiten Material umspritzt oder umflochten werden. Gleichermassen kann die Schlauchanordnung extrudiert, insbesondere hochdruckextrudiert werden, wobei die Zugträger beim oder nach dem Extrudieren in die Schläuche eingebracht werden.
c) Herstellen des Riemenkörpers aus dem ersten Material. Dies kann bevorzugt durch Extrudieren des ersten Materials in die Form des Riemenkörpers geschehen.
d) Verbinden von Riemenkörper und Schlauchanordnung. Dies kann beispielsweise dadurch geschehen, dass die mit dem zweiten Material umhüllten Zugträger beim Extrudieren des Riemenkörpers in diesen eingebettet werden. Bevorzugt kann hierbei ein Klebstoff, insbesondere ein thermischer Klebstoff, zwischen Schlauchanordnung und Riemenkörper aufgebracht werden und diese besonders dauerhaft miteinander verbinden.

Die vorgenannten Schritte a) bis d) müssen nicht zwingend in dieser Reihefolge ausgeführt werden.

Eine Aufzuganlage nach der vorliegenden Erfindung umfasst eine Aufzugkabine, einen Antrieb mit wenigstens einem Treibrad und einer Riemenanordnung mit wenigstens einem Aufzugriemen nach einer Ausführung der vorliegenden Erfindung. Vorteilhaft kann die Riemenanordnung auch mehrere Aufzugriemen nach einer oder verschiedenen Ausführungen der vorliegenden Erfindung umfassen, die, beispielsweise formschlüssig, fest oder lösbar miteinander verbunden sein können. Dies ermöglicht es, eine relativ breite Riemenanordnung aus mehreren schmalen, leichter zu handhabenden Riemen vor Ort zusammenzusetzen. Mindestens ein Treibrad weist in einer bevorzugten Ausführung ein der Kontaktfläche der Aufzugriemens entsprechendes, d. h. ein zu dieser Kontaktfläche im Wesentlichen komplementär ausgebildetes Keilrippenprofil auf.

Weitere Aufgaben, Merkmale und Vorteile ergeben sich aus den Unteransprüchen und den nachfolgend beschriebenen Ausführungsbeispiele. Hierzu zeigt:
- Fig. 1: einen Querschnitt durch einen Aufzugriemen nach einer ersten Ausführung der vorliegenden Erfindung;
- Fig. 2: einen Querschnitt durch einen Aufzugriemen nach einer zweiten Ausführung der vorliegenden Erfindung;
- Fig. 3: einen Querschnitt durch einen Aufzugriemen nach einer dritten Ausführung der vorliegenden Erfindung;
- Fig. 4: einen Querschnitt durch einen Aufzugriemen nach einer vierten Ausführung der vorliegenden Erfindung;
- Fig. 5: einen Querschnitt durch einen Aufzugriemen nach einer fünften Ausführung der vorliegenden Erfindung; und
- Fig. 6: einen zu einer Aufzugskabinenfront parallelen Schnitt durch eine Aufzugsanlage nach einer Ausführung der vorliegenden Erfindung.

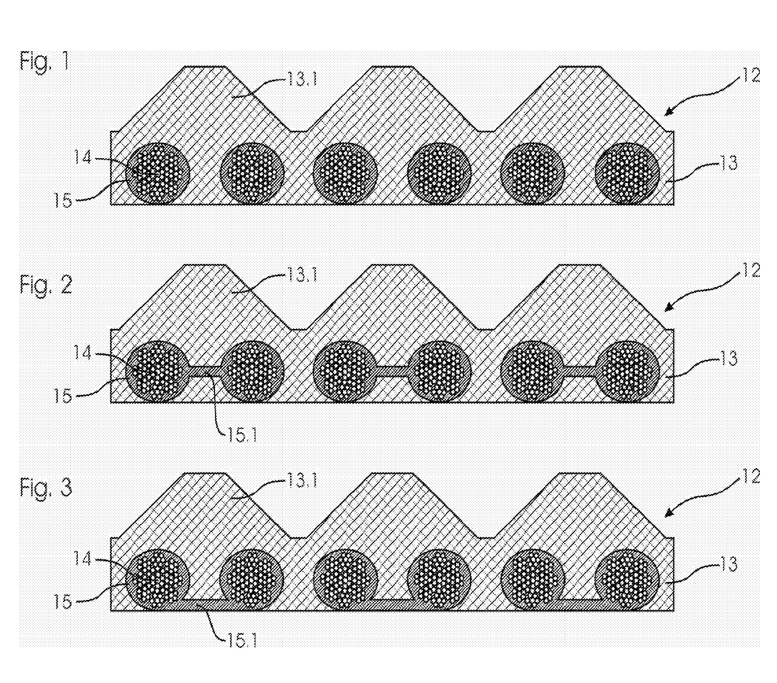

Fig. 1 zeigt einen Querschnitt durch einen Aufzugriemen 12 nach einer ersten Ausführung der vorliegenden Erfindung. Dieser Aufzugriemen umfasst eine Schlauchanordnung mit mehreren einzelnen Schläuchen 15 aus einem thermoplastischen Kunststoff, im Ausführungsbeispiel aus Polyamid. In jedem der Schläuche ist jeweils ein Zugträger 14 angeordnet, wobei der Zugträger aus einem Stahldrahtseil besteht, das aus Litzen verseilt ist, die ihrerseits aus Stahldrähten verseilt sind.

Bei der Herstellung des Aufzugriemens 12 werden die einzelnen Zugträger mit Polyamid umspritzt, wobei auch die Zwischenräume zwischen den Stahldrähten möglichst vollständig mit Polyamid ausgefüllt werden. Anschliessend wird ein Riemenkörper 13 aus einem Elastomer, im Ausführungsbeispiel aus Polyurethan, auf die Schlauchanordnung aufextrudiert. Die einzelnen Schläuche weisen einen grösseren Querschnitt auf als die in ihnen angeordneten Zugträger. Sie können daher beim Extrudiervorgang besser lagerichtig zueinander und zu dem entstehenden Riemenkörper 13, insbesondere zu dessen Keilrippen 13.1 geführt werden. Um eine besonders hoch belastbare Verbindung zwischen den Schläuchen und dem Elastomer des Riemenkörpers zu erreichen, können die Schläuche mit einem Haftvermittler, vorzugsweise in Form eines Klebstoffs, beschichtet sein.
Besonders vorteilhaft sind jeder Keilrippe 13.1 zwei Zugträger 14 zugeordnet, so dass jedem Zugträger 14 eine Flanke dieser Keilrippe 13.1 zugeordnet ist, über die im Wesentlichen eine Traktionskraft von einem Treibrad auf diesen Zugträger übertragen wird.

In einer nicht dargestellten Abwandlung der ersten Ausführung ist die durch die Keilrippen 13.1 gebildete Kontaktfläche mit einer dünnen Beschichtung aus Polyamid versehen, um den Reibwert zu senken. Dies kann sinnvoll sein, wenn der Aufzugriemen eine für die Anwendung in einem bestimmten Aufzug zu hohe Traktionsfähigkeit zeigt. Eine solche Polyamid-Beschichtung vermindert ausserdem den Verschleiss der Kontaktfläche und reduziert die Gefahr eines Verklemmens der Keilrippen des Aufzugriemens 12 in den Rillen eines Treibrads.

Fig. 2 zeigt einen Querschnitt durch einen Aufzugriemen 12 nach einer zweiten Ausführung der vorliegenden Erfindung. Mit der ersten Ausführung übereinstimmende Bauteile sind mit gleichen Bezugszeichen bezeichnet, so dass nachfolgend nur auf die Unterschiede zur ersten Ausführung eingegangen wird.

In der zweiten Ausführung sind jeweils die zwei einer Keilrippe 13.1 zugeordneten Schläuche 15 der Schlauchanordnung durch einen Steg 15.1 miteinander verbunden. Dieser ist zentrisch zu den Zugträgern 14 und den diese konzentrisch umgebenden Schläuchen 15 angeordnet. Solche Stege verleihen den Gebilden aus jeweils zwei miteinander verbundenen Schläuchen und Zugträgern eine erhöhte Steifigkeit in Querrichtung, wodurch bewirkt wird, dass der Aufzugriemen auch auf langen, ungeführten Riemenabschnitten sich perfekt geradlinig erstreckt und nicht zu Schwingungen neigt.

Zur Herstellung des Aufzugriemens nach der zweiten Ausführung werden die Schlauchpaare der Schlauchanordnung unter Hochdruck extrudiert, wobei die Zugträger 14 einer Extrusionsdüse derart zugeführt werden, dass in jedem Schlauch 15 ein Zugträger 14 im Wesentlichen mittig angeordnet wird, wobei vorteilhaft das zweite Material des Schlauches 15 möglichst vollständig die vorhandenen Zwischenräume zwischen den Einzeldrähten des Zugträgers 14 ausfüllt. In einem weiteren Schritt werden die Schlauchpaare wiederum lagerichtig einem Extruder zugeführt, in welchem der Riemenkörper 13 extrudiert und gleichzeitig die Schlauchanordnung in diesen eingebettet wird. Dabei werden die Stege 15.1 beidseitig von dessen ersten Material des Riemenkörpers umschlossen. Da jeweils zwei Schläuche mit eingebetteten Zugträgern unverschieblich voneinander beabstandet sind und die Schlauchpaare grössere Einheiten bilden, können diese leichter lagerichtig den jeweiligen Keilrippen 13.1 zugeordnet werden.

Fig. 3 zeigt einen Querschnitt durch einen Aufzugriemen 12 nach einer dritten Ausführung der vorliegenden Erfindung. Mit der zweiten Ausführung übereinstimmende Bauteile sind mit gleichen Bezugszeichen bezeichnet, so dass nachfolgend nur auf die Unterschiede zur zweiten Ausführung eingegangen wird.

In der dritten Ausführung sind die Stege 15.1, die jeweils zwei einer Keilrippe 13.1 zugeordnete Schläuche 15 mit darin angeordneten Zugträgern 14 miteinander verbinden, tangential zu diesen Schläuchen 15 angeordnet. Sie bilden dabei einen Teil einer Rückseite (unten in Fig. 3) des Aufzugriemens 12. Der gegenüber dem Reibwert des Elastomers des Riemenkörpers reduzierte Reibwert dieser Riemenrückseite verleiht dem Aufzugriemen vorteilhafte Eigenschaften bei seiner Umlenkung um nicht profilierte Umlenkscheiben.

Auch bei dieser Anordnung der Stege 15.1 verleihen diese den Gebilden aus miteinander verbundenen Schläuchen und Zugträgern eine erhöhte Steifigkeit in Querrichtung, wodurch erreicht wird, dass sich der Aufzugriemen auch auf langen, ungeführten Riemenabschnitten geradlinig erstreckt und nicht zu Schwingungen neigt.

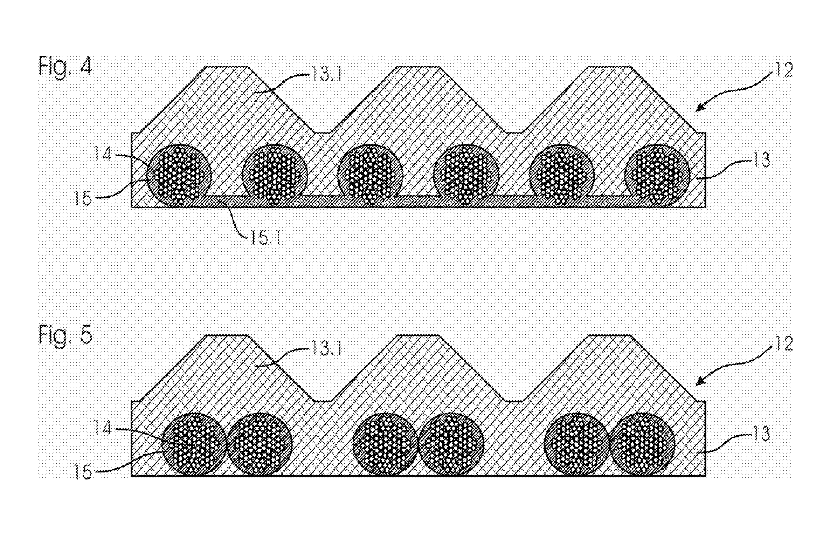

Fig. 4 zeigt einen Querschnitt durch einen Aufzugriemen 12 nach einer vierten Ausführung der vorliegenden Erfindung. Mit der dritten Ausführung übereinstimmende Bauteile sind mit gleichen Bezugszeichen bezeichnet, so dass nachfolgend nur auf die Unterschiede zur dritten Ausführung eingegangen wird.

In der vierten Ausführung sind alle Schläuche 15 mit darin angeordneten Zugträgern 14 durch einen einzigen Steg 15.1 miteinander verbunden, der tangential zu diesen Schläuchen 15 angeordnet ist und im Wesentlichen die Rückseite des Aufzugriemens 12 bildet, die dazu vorgesehen ist, über Umlenkräder umgelenkt zu werden. Die solcherart im Wesentlichen aus Polyamid bestehende Rückseite ist abriebfester und weist einen geringeren Reibwert auf, so dass bei Umlenkung um die Rückseite des Aufzugriemens 12 weniger Verschleiss auftritt und sich der Energiebedarf zur Bewegung des Aufzugriemens reduziert. In einer nicht dargestellten Abwandlung erstreckt sich der Steg 15.1 über die gesamte Rückseite des Aufzugriemens 12.

Fig. 5 zeigt einen Querschnitt durch einen Aufzugriemen 12 nach einer fünften Ausführung der vorliegenden Erfindung. Mit der ersten Ausführung übereinstimmende Bauteile sind mit gleichen Bezugszeichen bezeichnet, so dass nachfolgend nur auf die Unterschiede zur ersten Ausführung eingegangen wird.

In der fünften Ausführung sind die beiden Schläuche 15, die jeweils einer Keilrippe zugeordnet sind, nicht voneinander beabstandet, sondern berühren einander. Damit vergleichmässigt sich vorteilhaft der Abstand der Zugträger 14 zu den Flanken der Keilrippen 13.1, i.e. der Abstand eines Zugträgers 14 zu seiner zugeordneten Flanke ändert sich zwischen Rippenspitze und der Rippenbasis nicht so stark. Dies bewirkt eine bessere Verteilung der übertragenen Kräfte im Riemenkörper 13.

Zur Herstellung des Aufzugriemens nach der fünften Ausführung werden die Zugträger 14 einzeln mit Polyamid umspritzt, wobei bevorzugt alle Zwischenräume zwischen den einzelnen Drähten des Zugträgers ausgefüllt werden. Anschliessend werden je zwei Schläuche 15 mit einem thermischen Klebstoff beschichtet und gemeinsam dem Extruder zugeführt, der den Riemenkörper 13 extrudiert. Während dessen Extrusion werden die Schläuche 15 der Schlauchpaare in dem Riemenkörper 13 eingebettet, wobei sie sich durch den hierbei aktivierten thermischen Klebstoff sowohl mit dem Riemenkörper 13 als auch miteinander verbinden.

Selbstverständlich können die Schläuche der in Fig. 5 dargestellten Schlauchpaare auch gemeinsam extrudiert und dabei im Bereich ihrer gemeinsamen Berührungszone fest verbunden werden. Auch bei dieser Ausführungsart resultiert eine erhöhte Quersteifigkeit mit den bereits vorstehend beschriebenen Vorteilen.

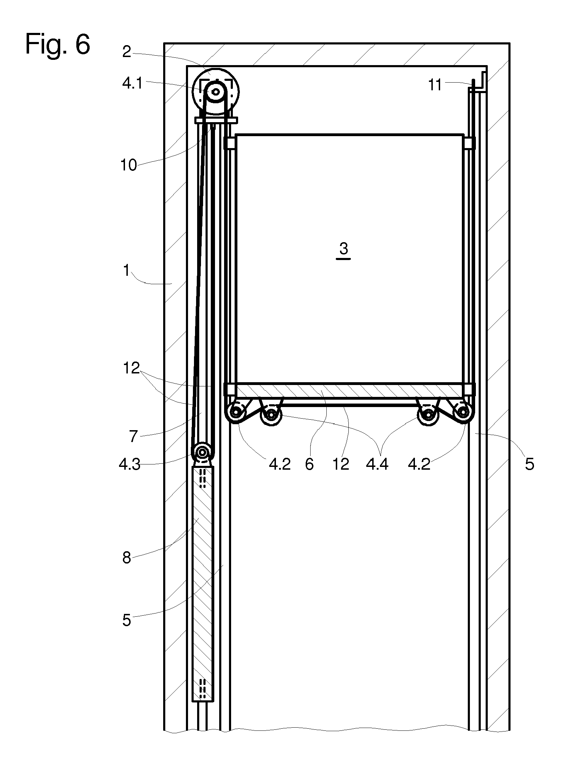

Fig. 6 zeigt schematisch einen Schnitt durch ein in einem Aufzugsschacht 1 installiertes Aufzugssystem mit einem Aufzugriemen 12 nach einer der vorstehen beschriebenen Ausführungen. Das Aufzugssystem umfasst einen in einem Aufzugsschacht 1 fixierten Antrieb 2 mit einem Treibrad 4.1, eine an Kabinenführungsschienen 5 geführte Aufzugskabine 3 mit unterhalb des Kabinenbodens 6 angebrachten Umlenkrädern in Form von Kabinentragrollen 4.2, ein an Gegengewichtsführungsschienen 7 geführtes Gegengewicht 8 mit einem weiteren Umlenkrad in Form einer Gegengewichtstragrolle 4.3, und den Aufzugriemen 12 für die Aufzugskabine 3 und das Gegengewicht 8, der die Antriebskraft von dem Treibrad 4.1 der Antriebseinheit 2 auf die Aufzugskabine und das Gegengewicht überträgt.

Der Aufzugriemen 12 ist an einem seiner Enden unterhalb des Treibrades 4.1 an einem ersten Riemenfixpunkt 10 befestigt. Von diesem aus erstreckt er sich abwärts bis zu der Gegengewichtstragrolle 4.3, umschlingt diese und erstreckt sich von dieser aus zum Treibrad 4.1, umschlingt dieses und verläuft entlang der gegengewichtsseitigen Kabinenwand abwärts, umschlingt auf beiden Seiten der Aufzugskabine je eine unterhalb der Aufzugskabine 3 angebrachte Kabinentragrolle 4.2 um je 90° und verläuft entlang der dem Gegengewicht 8 abgewandten Kabinenwand aufwärts zu einem zweiten Riemenfixpunkt 11.

Die Ebene des Treibrades 4.1 kann rechtwinklig zur gegengewichtsseitigen Kabinenwand angeordnet sein und ihre Vertikalprojektion kann ausserhalb der Vertikalprojektion der Aufzugskabine 3 liegen. Es ist daher zu bevorzugen, dass das Treibrad 4.1 einen geringen Durchmesser aufweist, damit der Abstand zwischen der linksseitigen Kabinenwand und der dieser gegenüber liegenden Wand des Aufzugsschachts 1 möglichst klein sein kann. Ausserdem ermöglicht ein geringer Treibraddurchmesser die Verwendung eines getriebelosen Antriebsmotors mit relativ geringem Antriebsdrehmoment als Antriebseinheit 2.

Das Treibrad 4.1 und die Gegengewichtstragrolle 4.3 sind an ihrer Peripherie mit Rillen versehen, die den Rippen 13.1 des Aufzugriemens 12 entsprechen. Wo der Aufzugriemen 12 eines der Treib- bzw. Umlenkräder 4.1 oder 4.3 umschlingt, liegen die auf seine Kontaktfläche angeordnete Rippen in korrespondierenden Rillen des Treib- bzw. Umlenkrades, wodurch eine ausgezeichnete Führung des Aufzugriemens auf diesen Rädern gewährleistet ist. Ausserdem wird durch die zwischen den Rillen des Treibrades 4.1 und den Rippen des Aufzugriemens 12 entstehende Keilwirkung die Traktionsfähigkeit verbessert.

Bei dem in Fig. 6 dargestellten Aufzugssystem erfolgt die Umschlingung der als Kabinentragrollen dienenden Umlenkrollen 4.2 unterhalb der Aufzugskabine 3 so, dass die die Keilrippen aufweisende Kontaktseite des Aufzugsriemens 12 von der Peripherie der Umlenkrollen 4.2 abgewandt ist. Der Aufzugriemen liegt dabei mit seiner Rückenschicht an den Umlenkrollen 4.2 an, wobei diese Rückenschicht, wie vorstehend beschrieben, gegenüber den Umlenkrollen 4.2 einen niedrigen Reibungskoeffizient aufweist. Um die Seitenführung des Aufzugriemens in diesem Bereich zu gewährleisten, sind am Kabinenboden 6 zwei zusätzliche, mit Keilrillen versehene Führungsrollen 4.4 angebracht, deren Keilrillen mit den Keilrippen des Aufzugsriemens 12 als Seitenführung zusammenwirken.

## Patentansprüche

1. Aufzugriemen (12), umfassend:
einen Riemenkörper (13) aus einem ersten Material; und
eine Zugträgeranordnung mit wenigstens einem Zugträger (14), die in dem Riemenkörper angeordnet ist;
**dadurch gekennzeichnet, dass**
der Riemen weiter eine Schlauchanordnung aus einem zweiten Material mit wenigstens einem Schlauch (15) umfasst, wobei wenigstens ein Zugträger (14) der Zugträgeranordnung in einem Schlauch der Schlauchanordnung angeordnet ist.

2. Aufzugriemen nach Anspruch 1, **dadurch gekennzeichnet, dass** mehrere, bevorzugt alle Zugträger (14) der Zugträgeranordnung in je einem Schlauch (15) der Schlauchanordnung angeordnet sind.

3. Aufzugriemen nach einem der vorhergehenden Ansprüche, **dadurch gekennzeichnet, dass** ein Zugträger (14) von einem im Wesentlichen konzentrischen Schlauch (15) umhüllt ist.

4. Aufzugriemen nach einem der vorhergehenden Ansprüche, **dadurch gekennzeichnet, dass** wenigstens ein Schlauch der Schlauchanordnung einen Zugträger der Zugträgeranordnung mantelartig umhüllt.

5. Aufzugriemen nach einem der vorhergehenden Ansprüche, **dadurch gekennzeichnet, dass** wenigstens ein Zugträger (14) der Zugträgeranordnung in einem strangartigen Schlauch (15) der Schlauchanordnung eingebettet ist.

6. Aufzugriemen nach einem der vorhergehenden Ansprüche, **dadurch gekennzeichnet, dass** zwei oder mehr Schläuche (15) der Schlauchanordnung miteinander über je einen Steg (15.1) verbunden sind.

7. Aufzugriemen nach Anspruch 6, **dadurch gekennzeichnet, dass** ein Steg (15.1) im Wesentlichen zentrisch zu den durch ihn verbundenen Schläuchen (15) und/oder den darin angeordneten Zugträgern (14) angeordnet ist.

8. Aufzugriemen nach Anspruch 6, **dadurch gekennzeichnet, dass** ein Steg (15.1) im Wesentlichen tangential zu den durch ihn verbundenen Schläuchen (15) angeordnet ist.

9. Aufzugriemen nach Anspruch 8, **dadurch gekennzeichnet, dass** ein im Wesentlichen tangential zu den durch ihn verbundenen Schläuchen (15) angeordneter Steg (15.1) wenigstens teilweise eine Rückseite des Aufzugriemens (12) bildet, die einer Kontaktfläche zum Zusammenwirken mit einem Treibrad (4.1) der Aufzuganlage gegenüberliegt.

10. Aufzugriemen nach einem der vorhergehenden Ansprüche, **dadurch gekennzeichnet, dass** der Riemenkörper (13) eine Kontaktfläche zum Zusammenwirken mit einem Treibrad (4.1) der Aufzuganlage aufweist, in der wenigstens eine Keilrippe (13.1) ausgebildet ist.

11. Aufzugriemen nach einem der vorhergehenden Ansprüche, **dadurch gekennzeichnet, dass** das erste Material ein Elastomer, insbesondere Polyurethan (PU), Polychloropren (CR) und/oder Ethylen-Propylen-Dien-Kautschuk (EPDM) umfasst.

12. Aufzugriemen nach einem der vorhergehenden Ansprüche, **dadurch gekennzeichnet, dass** das zweite Material einen thermoplastischen Kunststoff, insbesondere Polyamid (PA), Polyethylen (PE), Polyester, insbesondere Polyethylenterephthalat (PET) und/oder Polycarbonat (PC), Polypropylen (PP), Polybutylenterephthalat (PBT), Polyethersulfon (PES), Polyphenylensulfid (PPS), Polytetrafluorethylen (PTFE), Polyvinylchlorid (PVC) oder Polyblend und/oder ein Gewebe aus einem solchen thermoplastischem Kunststoff umfasst.

13. Aufzugriemen nach einem der vorhergehenden Ansprüche, **dadurch gekennzeichnet, dass** ein Zugträger der Zugträgeranordnung als Einfachdraht ausgebildet oder aus ein- oder mehrfach verseilten Drähten aufgebaut ist, wobei die einzelnen Drähte aus Stahl und/oder Kunststoff hergestellt sind

14. Herstellungsverfahren für einen Aufzugriemen nach einem der vorhergehenden Ansprüche mit den Schritten:
- Herstellen der Schlauchanordnung aus dem zweiten Material;
- Anordnen von wenigstens einem Zugträger (14) der Zugträgeranordnung in einem Schlauch (15) der Schlauchanordnung;
- Herstellen des Riemenkörpers (13) aus dem ersten Material; und
- Verbinden des Riemenkörpers (13) mit der Schlauchanordnung.

15. Aufzuganlage mit einer Aufzugkabine (3), einem Antrieb (2) mit einem Treibrad (4.1) und einer Riemenanordnung mit wenigstens einem Aufzugriemen (12) nach einem der Ansprüche 1 bis 13.
